# EUROPÄISCHE PATENTSCHRIFT

(11) **EP 1 200 302 B1**
(45) Veröffentlichungstag und Bekanntmachung des Hinweises auf die Patenterteilung: **06.10.2004**
(21) Anmeldenummer: 00943922.5
(22) Anmeldetag: 28.06.2000
(51) Int. Cl.: B62H 5/06, B62K 21/18, B62H 5/00

(54) **DIEBSTAHLSICHERUNGSVORRICHTUNG FÜR FAHRRÄDER**
THEFT-PROTECTION DEVICE FOR BICYCLES
DISPOSITIF D'ANTIVOL POUR BICYCLETTES

(30) Priorität: 15.07.1999 DE 19933102; 22.09.1999 DE 19945284
(43) Veröffentlichungstag der Anmeldung: 02.05.2002
(73) Patentinhaber: Backhaus, Christian, 28203 Bremen (DE)
(72) Erfinder: Backhaus, Christian, 28203 Bremen (DE)
(74) Vertreter: Eisenführ, Speiser & Partner
(86) Internationale Anmeldenummer: PCT/EP2000/006015
(87) Internationale Veröffentlichungsnummer: WO 2001/005645

(56) Entgegenhaltungen:
- DE-A- 19 722 892
- DE-U- 9 415 490
- DE-U- 9 417 468
- US-A- 5 832 753

## Beschreibung

Die Erfindung betrifft eine Diebstahlsicherungsvorrichtung für Fahrräder, die einen Fahrradrahmen und eine am Fahrradrahmen gelagerte Lenksäule zum Lenken des Fahrrades aufweisen, welche für eine drehfeste Kopplung eines Fahrradlenkers mit einer Gabel für ein Vorderrad vorgesehen ist, mit einem Trennmittel zum Aufheben der drehfesten Kopplung.

Derartige Diebstahlsicherungsvorrichtungen sind bekannt. Im Unterschied etwa zu einem herkömmlichen Bügelschloß, das in einer Sicherungsstellung an dem Fahrrad exponiert angeordnet ist und aus diesem Grunde einem Dieb Angriffspunkte zum gegebenenfalls gewaltsamen Öffnen gibt, ermöglicht die vorgenannte Diebstahlsicherungsvorrichtung eine weitergehende Sicherung des Fahrrades vor Diebstahl, da der Dieb, auch wenn er zur Anwendung von Gewalt bereit ist, die Wirkung der Diebstahlsicherung nicht aufheben kann, ohne das Fahrrad zu beschädigen.

Bei einem Bügelschloß kommt ein klassisches Sicherungsprinzip zur Anwendung, das darin besteht, am zu sichernden Gegenstand ausgebildete, relativ zueinander bewegliche Teile in eine mehr oder weniger feste oder stationäre Stellung zueinander zu bringen, so daß die Beweglichkeit der Teile eingeschränkt und der Gegenstand in der Sicherungsstellung nicht zu gebrauchen ist. Sofern es sich bei dem zu sichernden Gegenstand um ein Fahrrad handelt, wird bekanntermaßen eine freie Drehbarkeit etwa des Hinterrades verhindert, indem das Bügelschloß sowohl um ein Rohr des Fahrradrahmens als auch um einen Abschnitt der Felge des Hinterrades gelegt und dann verschlossen wird. Alternativ kann das Bügelschloß auch um das Rohr des Fahrradrahmens und um einen ortsfesten Gegenstand wie etwa einen Laternenpfahl gelegt werden, um die Beweglichkeit des Fahrrades insgesamt zu verhindern.

WO 92/10392 offenbart eine Lenkerschließeinrichtung für Fahrräder. Die Einrichtung weist einen Schließmechanismus in einen Lenkervorbau auf, der den Lenkervorbau entweder in einer Entsicherungsstellung mit der Vorderradgabel in Eingriff bringt oder in der Sicherungsstellung derart von ihr trennt, daß die Lenkstütze und die Vorderradgabel frei zueinander drehbar sind. Eine an der Vorderradgabel befestigte Lenksäule und ein an dem Lenkervorbau befestigtes Rohrstück sind in der Entsicherungsstellung drehfest miteinander verbunden und in einem Fahrradrahmenabschnitt gemeinsam drehbar. Ein mittels eines Schlüssels betätigter Nocken bewegt ein in der Lenksäule angeordnetes Walzenschloß radial nach außen und führt es zum Entsichern in eine im Rohrstück befindliche Fassung ein, so daß das Fahrrad steuerbar ist. Der Nocken ermöglicht ferner ein Einführen des Walzenschlosses in eine Öffnung, die zum Trennen der Vorderradgabel von dem Lenkervorbau vorgesehen ist, so daß das Fahrrad nicht lenkbar und dadurch gegen Diebstahl gesichert ist. Die bekannte Diebstahlsicherungsvorrichtung wirkt somit in Umkehrung des vorstehend erläuterten Sicherüngsprinzips, indem nämlich eine zum Betrieb des Fahrrades erforderliche feste Verbindung zweier Teile in der Sicherungsstellung aufgehoben ist.

Die bekannte Diebstahlsicherungsvorrichtung gibt zwar keine praktische Möglichkeit, unter Anwendung von Gewalt eine Entsicherung des Schlosses herbeizuführen. Die bekannte Diebstählsicherungsvorrichtung ist dennoch insofern nachteilig, als daß ein geschickter Dieb diese aufzuheben vermag, um das Fahrrad zerstörungsfrei zu entsichern. Dies ist gerade im Hinblick auf die Sicherung hochwertiger Fahrräder ein Problem, die naturgemäß für den Dieb besonders interessant sind und bei denen zur Erhaltung ihres Wiederverkaufswertes eine Anwendung von roher Gewalt für den gewissenhaften Dieb nicht in Frage kommt, so daß der Dieb bereit ist, das unbefugte Entsichern der Diebstahlsicherungsvorrichtung ausführlich einzustudieren und zu erlernen.

Der Erfindung liegt die Aufgabe zugrunde, ein Diebstahlsicherungsvorrichtung für Fahrräder zu schaffen, deren Entsicherung einen Dieb vor eine erheblich schwierigere Aufgabe stellt als bekannte Diebstahlsicherungsvorrichtungen.

Diese Aufgabe wird bei der Vorrichtung der eingangs genannten Art erfindungsgemäß dadurch gelöst, daß als Trennmittel ein Kopplungsstück bzw. ein Verbindungselement vorgesehen ist, das die Lenksäule in zwei Teile unterbricht und die drehfeste Kopplung dieser Lenksäulenteile in einem ersten Zustand herstellt und in einem zweiten Zustand aufhebt.

Mit der Erfindung erhält man eine Diebstahisicherungsvorrichtung, die deutlich schwieriger zuentsichern ist als bekannte Diebstahlsicherungsvorrichtungen, wenn das Kopplungsstück bzw. das Verbindungselement in einer Sicherungsstellung von einem Benutzer dem Fahrrad entnommen ist. Die erfindungsgemäße Diebstahlsicherungsvorrichtung ist in das Fahrrad hochintegriert.

Das Kopplungsstück bzw. das Verbindungselement ist im wesentlichen spiegeloder punktsymmetrisch ausgebildet. Beidseitig der Symmetrieebene weist es Ausnehmungen und/oder Ansätze auf, die in dem ersten Zustand mit an den Lenksäulenteilen ausgebildeten Komplementärmitteln im Eingriff stehen und dabei eine form- und/oder kraftschlüssige Verbindung eingehen und in dem zweiten Zustand von den Komplementärmitteln gelöst sind.

Bei einer ersten Ausführungsform der Erfindung ist das Kopplungsstück mit einem Säulenstück ausgebildet, das im ersten Zustand zwischen den Teilen der Lenksäule eingeschoben ist und mit diesen fluchtet und das im zweiten Zustand von den Teilen der Lenksäule vollständig entfernt ist. Im ersten Zustand ist das Fahrrad entsichert. Das zwischen den Teilen der Lenksäule eingeschobene Säulenstück ermöglicht eine drehfeste Verbindung der Teile der Lenksäule miteinander, so daß die Lenksäule mit dem erfindungsgemäßen Kopplungsstück in ihrer Funktion gegenüber einer herkömmlichen Lenksäule praktisch nicht eingeschränkt ist. Im zweiten Zustand ist das Fahrrad gesichert. Die Teile der Lenksäule sind koaxial beabstandet zueinander angeordnet. Es bedarf des im zweiten Zustand vollständig entfernten Kopplungsstückes, um eine Verbindung der Teile der Lenksäule und damit die Funktionstüchtigkeit der Lenksäule wieder herzustellen. Sofern kein passendes Kopplungsstück zwischen den Teilen der Lenksäule eingefügt wird, ist der Gebrauch des Fahrrades ausgeschlossen und deshalb für einen Dieb uninteressant.

Ferner weist das Kopplungsstück zwei axial nebeneinander angeordnete Kopplungshülsen auf. Das Säulenstück ist in den Kopplungshülsen aufgenommen. Die Kopplungshülsen weisen Außengewinde auf, die für einen Eingriff mit einem Innengewinde in dem jeweils benachbarten Abschnitt des Fahrradrahmens vorgesehen sind. In der Sicherungsstellung sind die Kopplungshülsen axial benachbart; in der Entsicherungsstellung sind sie voneinander beabstandet. Beim Übergang aus der Sicherungsstellung in die Entsicherungsstellung werden die Kopplungshülsen in den jeweils benachbarten Abschnitt des Fahrradrahmens eingedreht. Sofern die Kopplungshülsen gleichläufige Gewinde aufweisen, ist die Drehrichtung der Kopplungshülsen beim Ein- bzw. Ausdrehen zueinander gegenläufig. Es ist vorteilhaft, wenn die Kopplungshülsen zueinander gegenläufige Gewinde aufweisen, weil dann die Drehrichtungen der beiden Kopplungshülsen beim Ein- bzw. Ausdrehen übereinstimmen. Vorzugsweise ist das Säulenstück koaxial in den Kopplungshülsen um seine Längsachse verdrehbar und ferner axial verschiebbar angeordnet.

Bei einer bevorzugten Ausführungsform sind die Außengewinde auf den Kopplungshülsen und die zugeordneten Innengewinde in dem jeweils benachbarten Abschnitt des Fahrradrahmens individuell aufeinander abgestimmt. Aufgrund der individuellen Abstimmung der miteinander in Eingriff zu bringende Gewinde können nur die an den zugeordneten Kopplungstücken befindlichen Außengewinde in den jeweils benachbarten Abschnitt des Fahrradrahmens eingedreht werden. Ein anderes als das individuell vorgesehene Kopplungsstück weist dagegen Kopplungshülsen auf, deren Außengewinde.mit dem Innengewinde des jeweils benachbarten Abschnitts des Fahrradrahmens nicht in Eingriff bringbar sind. Mit dieser Individualisierung des Kopplungsstückes bezüglich des bestimmten Fahrradrahmens wird ein besonders hohes Maß an Sicherheit gegen Diebstahl erreicht.

Bevorzugt sind die Gewinde mehrgängig, damit bei einer Umdrehung der Kopplungshülsen eine relative große axiale Bewegung der Kopplungshülsen möglich ist. Besonders bevorzugt reicht nur eine Umdrehung der Kopplungshülsen, um das Säulenstück aus, um eine axiale Bewegung um eine vorgegebene Einschublänge der jeweiligen Kopplungshülse zu erreichen. Bei dieser bevorzugten Ausführungsform der Erfindung reicht zum Sichern bzw. Entsichern des Fahrrades eine einfache Umdrehung der Kopplungshülsen.

Das Säulenstück und die Kopplungshülsen sind in einem Schutzrohr aufgenommen. Das Schutzrohr ist von dem Fahrradrahmen lösbar und weist axial verschiebbare Mitnehmer auf. Die Mitnehmer nehmen die Kopplungshülsen bei einer Drehung des Schutzrohres relativ zu dem Fahrradrahmen mit. Vorzugsweise sind die Mitnehmer als radiale Stifte ausgebildet, die durch mindestens ein axiales Langloch in dem Schutzrohr nach außen ragen und von denen je einer der Stifte mit einer der Kopplungshülsen im Eingriff steht. Das Schutzrohr schützt den Benutzer vor Verschmutzungen, wie sie etwa durch von der Verbindung zwischen Kopplungshülsen und Säulenstücken austretenden Schmiermitteln entstehen. Das Schutzrohr schützt ferner das Säulenstück und die Kopplungshülsen vor dem Eintritt von Verunreinigungen und Feuchtigkeit, wodurch insbesondere ein wirksamer Schutz vor Korrosion erreicht wird. Wenn sich die Vorrichtung in der Entsicherungsstellung befindet, schützt das Schutzrohr ferner die benachbarten Abschnitte des Fahrradrahmens vor dem Eintritt von Verunreinigungen und Feuchtigkeit. Für den Benutzer verringert das Schutzrohr die Gefahr von Verletzungen, da es vorzugsweise mit dem Fahrradrahmen glatt abschließt, so daß die Betätigung der Diebstahlsicherungsvorrichtung besonders einfach ist. Weil das Schutzrohr sich in den Fahrradrahmen einfügt, ist die erfindungsgemäße Diebstahlsicherungsvorrichtung in dem Fahrrad besonders unauffällig angeordnet. Alternativ istdas Schutzrohr auffällig ausgestaltbar, um die Diebstahlsicherurigsvorrichtung am Fahrrad hervorzuheben und dem Benutzer als begehrenswertes Produkt darzustellen.

Bei einer zweiten Ausführungsform der Erfindung ist das Verbindungselement ring- bzw. rahmenförmig ausgebildet. Es weist Eingriffbügel auf, die für einen Eingriff mit Krallen der Lenksäulenteile in dem ersten Zustand vorgesehen sind. Jeder Eingriffbügel wird in dem ersten Zustand, der Entsicherungsstellung, von der Kralle des zugeordneten Lenksäulenteils gefaßt. Die Eingriffbügel gelangen aus dem ersten Zustand in den zweiten Zustand durch eine erste Drehbewegung des Verbindungselements um seine Mittelachse in einen vorzugsweise rechten Winkel zu der Achse der Lenksäule. In dem zweiten Zustand, der Sicherungsstellung, lagert das Verbindungselement frei zwischen den Lenksäulenteilen. Das Verbindungselement ist aus dem zweiten Zustand; der Sicherungsstellung, in den ersten Zustand, der Entsicherungsstellung, durch eine zweite, der ersten entgegengesetzte Drehbewegung überführbar.

Das Verbindungselement ist in dem zweiten Zustand durch eine Öffnung in der Wand des Fahrradrahmenabschnitts mit der Lenksäule aus dieser entnehmbar bzw. in diese einsetzbar. Die Sicherung ist besonders effektiv, wenn das Verbindungselement aus der Lenksäule vollständig entfernt ist. Für den Dieb ist es eine sehr schwierige Aufgabe, die Verbindung zwischen den Lenksäulenteilen herzustellen, wenn ihm das passende Verbindungselement nicht zur Verfügung steht.

Vorzugsweise weist das Verbindungselement auf einem der Mittelachse zugewandten Abschnitt der Eingriffbügel ein individuelles Profil bzw. Paßprofil auf, das mit einem komplementären Profil bzw. Paßprofil auf den Krallen in Eingriff bringbar ist. Aufgrund des komplementären Profils auf den Krallen ist zum Entsichern der erfindungsgemäßen Diebstahlsicherungsvorrichtung die Ausbildung des individuellen Profils auf dem zugeordneten Abschnitt des Verbindungselements erforderlich. So wird ein unbefugtes Entsichern zusätzlich erschwert.

Gemäß einer Ausführungsform der Erfindung sind die Eingriffbügel des Verbindungselements ggf. in der Symmetrieebene voneinander getrennt und bezüglich der Mittelachse radial verschiebbar angeordnet. Die Eingriffbügel sind mit Arretierungsausnehmungen in den Lenksäulenteilen in Eingriff bringbar.

Die axialen Abschnitte der Arretierungsbügel sind mit Ausnehmungen in den Stirnseiten der Lenksäulenteile in Eingriff bringbar. Wenn in der Entsicherungsstellung die Spreizrahmenhälften jeweils in den Stirnseiten der Lenksäulenteile in Eingriff gebracht sind, ist gewährleistet, daß ein unkontrolliertes Rückdrehen aus der Entsicherungsstellung, bei der die Lenksäulenteile drehfest miteinander verbunden sind, in die Sicherungsstellung, bei der Lenksäulenteile voneinander getrennt und gegeneinander frei drehbar sind, ausgeschlossen ist. Damit ist die Betriebssicherheit des Fahrrades gewährleistet, wenn sich die Diebstahlssicherungsvorrichtung in der Entsicherungsstellung befindet.

Bei einer erfindungsgemäßen Weiterbildung des Verbindungselments bilden die Eingriffbügel einen Innenring, der von einem Außenring umgeben wird. Der Außenring weist Arretierungsbügel auf, die voneinander unter Bildung von Stirnflächen vorzugsweise in der Symmetrieebene des Verbindungselements getrennt sind. Die Arretierungsbügel sind jeweils auf dem zugeordneten Eingriffbügel des Innenrings verschiebbar gelagert. Die Arretierungsbügel sind gegeneinander vorgespannt. Der Außenring weist ferner ein oder mehrere Spreizelemente zum Auseinanderschieben der Arretierungsbügel gegen die Vorspannung auf. Die Spreizelemente sind jeweils zwischen den Stirnflächen der Arretierungsbügel um die Mittelachse drehbar gelagert. Durch Drehung der Spreizelmente sind die Arretierungsbügel auseinander schiebbar. Bei dieser Ausführungsform der Erfindung ist die Betriebssicherheit besonders hoch, weil das Verbindungselement in der Entsicherungsstellung sowohl von den Krallen als auch in den entsprechenden Ausnehmungen in den Lenksäulenteilen kraft- und/oder formschlüssig gefaßt wird, wenn die Arretierungsbügel auseinander geschoben sind.

Das Querschnittsprofil des Spreizelementes in einer von der Mittelachse rechtwinklig durchsetzten Ebene ist im wesentlichen rechteckig mit zwei Breit- und zwei Schmalseiten ausgebildet, die jeweils einander gegenüber liegen. Wenn in der Sicherungsstellung das Verbindungselement zwischen die Lenksäulenteile eingebracht wird, sind die Spreizelemente zwischen den Arretierungsbügeln des Außenrings derart angeordnet, daß sie mit den Stirnflächen ihrer freien Enden gegen die Breitseitenflächen des Spreizelements drücken. Die einander gegenüberliegend angeordneten Stirnflächen der Arretierungsbügel weisen einen Abstand voneinander auf, der im wesentlichen der Schmalseite des rechteckigen Querschnittprofils des Spreizelements entspricht.

Wenn das Verbindungselement zwischen die Lenksäulenteile eingebracht ist und die Spreizelemente gedreht werden, folgen die Arretierungsbügel und die Eingriffbügel einer ersten Viertelkreisdrehung der Spreizelemente. Die Eingriffbügel werden von den Krallen gefaßt. Einer zweiten Viertelkreisdrehung der Spreizelemente um die Mittelachse vermag das Verbindungselement nicht zu folgen, da die Eingriffbügel von den Krallen gefaßt sind. Deshalb führt die zweite Viertelkreisdrehung dazu, daß das Spreizelement zwischen den Stirnflächen der Arretierungsbügel um 90° gedreht wird. Die Arretierungsbügel werden von dem Spreizelement entsprechend des Längenunterschiedes zwischen Breitseite und Schmalseite des Querschnittprofils des Spreizelementes auseinandergeschoben bzw. voneinander gespreizt. Bei der zweiten Viertelkreisdrehung der Spreizelemente wird der Außenring des Verbindungselements somit gestreckt. Ein unbeabsichtigtes Verdrehen des Spreizelements wird durch den Umstand vermieden, daß im Laufe der Viertelkreisdrehung die Arretierungsbügel gegen die Vorspannung zunächst maximal, nämlich auf die Länge der Diagonalen des rechteckigen Querschnittprofils auseinander geschoben werden müssen.

Vorzugsweise weist das Querschnittsprofil des Spreizelements abgerundete Ecken auf, so daß die Drehbarkeit des Spreizelements zwischen den Stirnflächen der vorgespannten Arretierungsbügel erhöht ist.

Die Seiten des Querschnittsprofils des Spreizelements sind bevorzugt konkav ausgebildet. Das Querschnittsprofil des Arretierungsbügels im Abschnitt der freien Enden ist bevorzugt derart konvex ausgebildet, daß der Arretierungsbügel sich mit der konvexen Stirnfläche an die konkave Seitenfläche des Spreizelments schmiegt. Bei dieser Ausbildung des Außenrings ist die Gefahr eines unbeabsichtigten Verdrehens der Spreizelemente besonders gering. Somit ist die Betriebssicherheit des Fahrrades in der Entsicherungsstellung der erfindungsgemäßen Diebstahlsicherungsvorrichtung besonders hoch.

Die vorstehend beschriebene erfindungsgemäße Diebstahlsicherungsvorrichtung befindet sich in einem Fahrrad mit einem Fahrradrahmen und einer am Fahrradrahmen gelagerten Lenksäule zum Lenken des Fahrrades, welche für eine drehfeste Kopplung eines Fahrradlenkers mit einer Gabel für ein Vorderrad vorgesehen ist. Obwohl die vorstehend beschriebene erfindungsgemäße Diebstahisicherungsvorrichtung besonders zur Diebstahlsicherung von Fahrrädern geeignet ist, kann der Fachmann ohne weiteres weitere Anwendungsgebiete erschließen, wie die Sicherung motorengetriebener Zweiräder oder anderer Fahrzeuge, die eine Lenksäule aufweisen.

Im folgenden werden zwei Ausführungsbeispiele der Erfindung anhand der Zeichnungen näher erläutert. Es zeigen:
- Fig. 1: eine perspektivische Ansicht eines vorderen Abschnitts eines Fahrrades, das mit einer ersten Ausführungsform der erfindungsgemäßen Diebstahlsicherungsvorrichtung ausgestattet ist;
- Fig. 2: eine perspektivische Ansicht eines Kopplungsstückes gemäß der ersten Ausführungsform der Erfindung;
- Fig. 3: eine Ansicht im Schnitt des zwischen zwei Lenksäulenteilen eingesetzten Kopplungsstückes gemäß der ersten Ausführungsform der Erfindung;
- Fig. 4: die gleiche Ansicht wie Fig. 3, bei welcher die Kopplungshülsen in jeweils benachbarte Abschnitte eines am Fahrradrahmen ausgebildeten Lenkkopfrohres eingedreht sind;
- Fig. 5: eine Explosiv-Darstellung einer Mitnehmerarretierung gemäß. der ersten Ausführungsform der Erfindung;
- Fig. 6: eine perspektivische Ansicht eines Kopplungsstückes gemäß einer zweiten Ausführungsform der Erfindung;
- Fig. 7: eine perspektivische Ansicht eines mit einer Kralle ausgebildeten Lenksäulenteils gemäß der zweiten Ausführungsform der Erfindung;
- Fig. 8: eine perspektivische Ansicht eines Spreizelementes mit anliegenden Arretierungsbügeln gemäß der zweiten Ausführungsform der Erfindung; und
- Fig. 9 bis 12: je eine Schnittansicht des Verbindungselements gemäß der zweiten Ausführungsform der Erfindung auf dem Bewegungsweg zwischen einer Sicherungsstellung und einer Entsicherungsstellung.

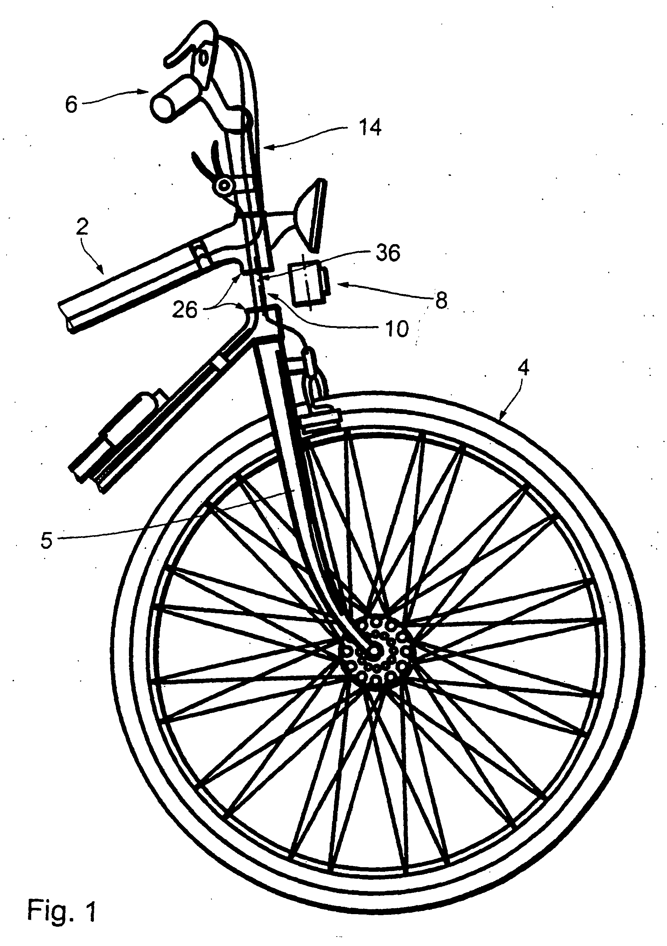

Bei dem in Fig. 1 dargestellten Fahrrad handelt es sich beispielsweise um ein herkömmliches Damenfahrrad mit einem Fahrradrahmen 2, einem Vorderrad 4, einer Vorderradgabel 5 und einem Fahrradlenker 6, der mittels einer Lenksäule 14 mit der Vorderradgabel 5 drehfest verbunden werden kann. Die Lenksäule 14 ist in einem Lenkkopfrohr 26 des Fahrradrahmens 2 drehbar gelagert. Das Damenfahrrad ist mit einer erfindungsgemäßen Diebstahlsicherungsvorrichtung versehen, bei der das Trennmittel gemäß einer ersten Ausführungsform der Erfindung als ein Kopplungsstück 8 derart ausgebildet ist, daß das Kopplungsstück 8 in eine Aussparung 10 des Lenkkopfrohres 26 einsetzbar ist.

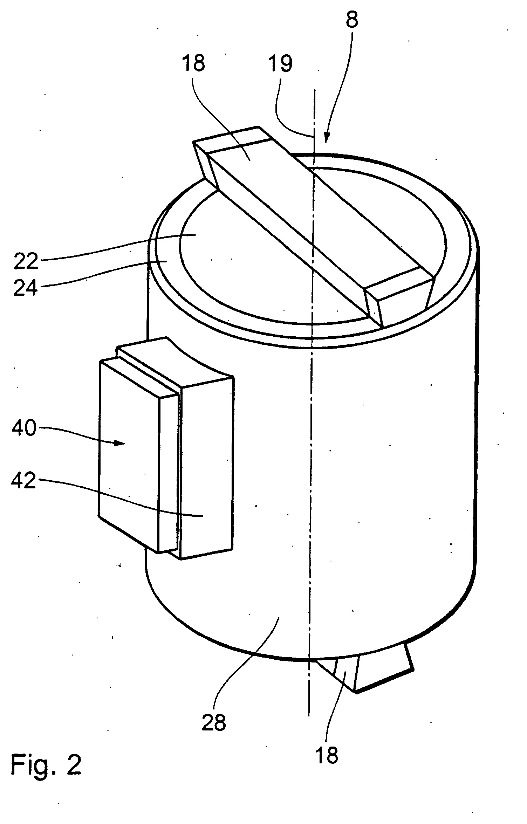

Fig. 2 zeigt das Kopplungsstück 8 im einzelnen. Das Kopplungsstück 8 ist zylinderförmig ausgebildet und weist ein Säulenstück 22, zwei Kopplungshülsen 24 und ein Schutzrohr 28 auf, die koaxial ineinander angeordnet sind. An die Stirnflächen des Säulenstückes 22 sowie an die entsprechenden Stirnflächen der Kopplungshülsen 24 ist rechtwinklig zur Längsachse 19 des Kopplungsstücks 8 ein Eingriffsansatz 18 angeformt. An die Mantelfläche des Schutzrohres 28 ist das Gehäuse 42 einer im wesentlichen als mechanischer Schalter ausgebildeten Mitnehmerarretierungseinrichtung 40 derart angeformt bzw. befestigt, daß ein Abschnitt des Schutzrohres 28 den Boden des Gehäuses 42 bildet.

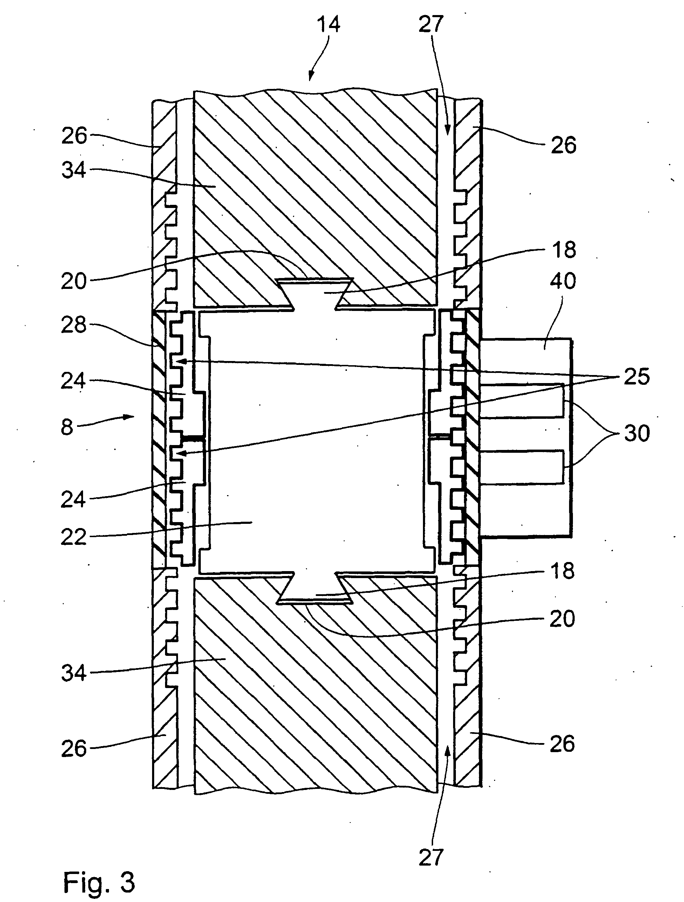

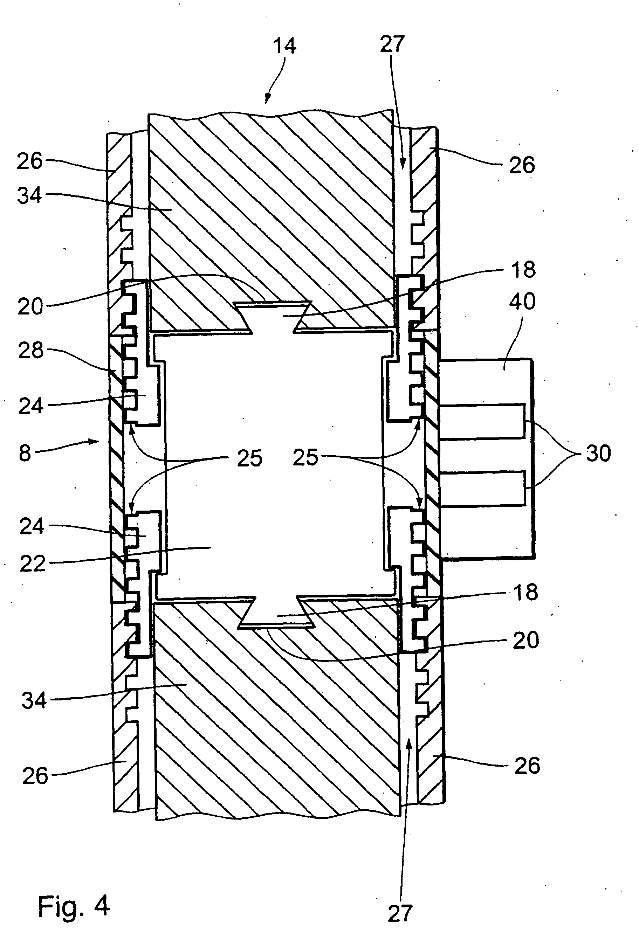

Bei der Darstellung in Fig. 3 und 4 ist das Kopplungsstück 8 zwischen zwei Lenksäulenteilen 34 derart eingeschoben, daß das Säulenstück 22 die Lenksäulenteile 34 miteinander verbindet und die Gesamtheit von Lenksäulenteilen 34 und Säulenstück 22 die Lenksäule 14 bildet. Dabei befinden sich die an den Stirnflächen des Säulenstückes 22 ausgebildeten Eingriffsansätze 18 jeweils im Eingriff mit einer Nut 20, die stirnseitig in dem jeweils benachbarten Lenksäulenteil 34 als Komplementärmittel zu dem Eingriffsansatz 18 ausgebildet ist, so daß die Lenksäulenteile 34 drehfest miteinander verbunden sind. Das Schutzrohr 28 des in die Aussparung 10 des Lenkkopfrohres 26 eingeschobenen Kopplungsstücks 8 fluchtet mit dem Lenkkopfrohr 26.

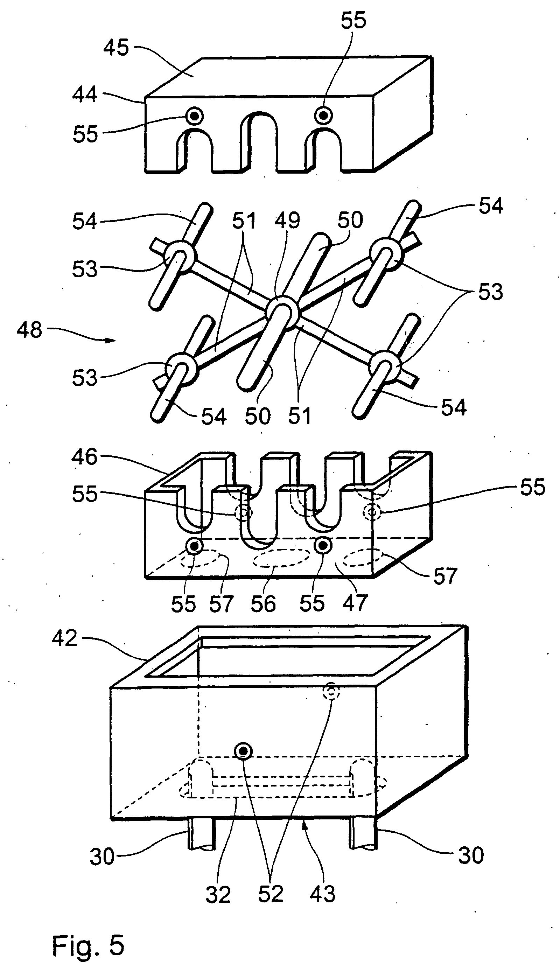

Die Kopplungshülsen 24 weisen an ihrer Außenseite ein mehrgängiges Außengewinde 25 auf, das für einen Eingriff mit einem entsprechenden Innengewinde 27 an der Innenseite des jeweils benachbarten Abschnitt des Lenkkopfrohres 26 vorgesehen ist. Die Gewinde sind zueinander gegenläufig ausgebildet. An den beiden Kopplungshülsen 24 des Kopplungsstückes 8 ist jeweils ein Mitnehmer 30 befestigt, der als Stift ausgebildet ist und radial durch ein Langloch 32 (vgl. Fig. 5) in der Wand des Schutzrohres 28 in das Innere der Mitnehmerarretierungseinrichtung 40 ragt. Gemäß Fig. 3 liegen die Kopplungshülsen 24 aneinander, während gemäß Fig. 4 die Kopplungshülsen 24 durch Drehen des Schutzrohres 28 in den jeweils benachbarten Abschnitt des Lenkkopfrohres 26 eingedreht sind.

Der Aufbau der Mitnehmerarretierungseinrichtung 40 ist in Fig. 5 dargestellt. Die Mitnehmerarretierungseinrichtung 40 weist das an dem Schutzrohr 28 (vgl. Fig. 2 - 4) einstückig angeformte bzw. befestigte Gehäuse 42, eine Drucktaste 44 und ein Widerlager 46 auf, die jeweils kastenförmig derart ausgebildet sind, daß sie ineinander einsetzbar sind. In dem Boden 47 des Widerlagers 46 befinden sich ein zentrales längliches erstes Arretierungsloch 56 sowie zwei in Längsrichtung des Kopplungsstückes 8 voneinander beabstandete periphere zweite Arretieruhgslöcher 57.

Die Drucktaste 44 und das Widerlager 46 sind - einander gegenüberliegend - mittels einer Gelenkschere 48 mit zwei Scherarmen 51 zueinander verschiebbar verbunden. Auf die Scherarme 51 sind Lager 53 aufschoben. Jedes Lager 53 ist mittels eines darin beweglich gelagerten Stiftes 54, der in entsprechenden Bohrungen 55 in der Wand der Drucktaste 44 bzw. des Widerlagers 46 gehalten wird, bezüglich der Drucktaste 44 bzw. des Widerlagers 46 ortsfest angeordnet. Bei einer anderen nicht dargestellten Ausführungsform sind die Scherarme 51 mit Langlöchern versehen, durch die je ein Stift 54, der in zwei entsprechenden, einander gegenüberliegenden Bohrungen 55 in der Wand der Drucktaste 44, bzw. in der Wand des Widerlagers 46 gehalten wird, derart hindurchgesteckt ist, daß jeder Scherarm 51 in Längsrichtung verschiebbar auf je zwei Stiften 54 gelagert ist. Die Drucktaste 44 und das Widerlager 46 sind durch Federn (nicht dargestellt), die zwischen dem Oberteil 45 der Drucktaste 44 und dem Boden 47 des Widerlagers 46 angeordnet sind, derart voneinanderweg vorgespannt, daß der Boden 47 des Widerlagers 46 auf den Boden 43 des Gehäuses 42 bzw. dem entsprechenden Wandabschnitt des Schutzrohres 28 aufliegt, wenn - wie unten erläutert - die Mitnehmer 30 im Eingriff mit den Arretierungslöchern 56 oder 57 stehen.

Die Gelenkschere 48 ist mit dem Gehäuse 42 verbunden, indem das Schergelenk 49 auf einer Achse 50 gelagert ist, die ihrerseits in Bohrungen 52 in der Wand des Gehäuses 42 gelagert und somit ortsfest angeordnet ist.

Durch das Langloch 32 im Boden 43 ragen die Mitnehmer 30 in das Innere des Gehäuses 42. Wenn der Abstand zwischen den Mitnehmern 30 dem Abstand zwischen den zweiten Arretierungslöchern 57 im Boden 47 des Widerlagers 46 entspricht, befinden sich die Mitnehmer 30 in einer ersten Arretierungsstellung und werden jeweils von dem zugeordneten zweiten Arretierungsloch 57 aufgenommen. Wenn die Mitnehmer 30 benachbart nebeneinander liegen, befinden sie sich in einer zweiten Arretierungsstellung und werden gemeinsam von dem zentralen ersten Arretierungsloch 56 im Boden 47 des Widerlagers 46 aufgenommen.

Wenn die Kopplungshülsen 24 - wie in Fig. 4 dargestellt - in die benachbarten Lenkkopfrohrabschnitte 26 in einem vorgegebenen Maße eingedreht sind, befinden sich die Mitnehmer 30 an den Kopplungshülsen 24 in der ersten Arretierungsstellung. Die Mitnehmer 30 ragen durch das Langloch 32 in dem Schutzrohr 28 in das Innere des Gehäuses 42 und sind jeweils in einem zugeordneten zweiten Loch 57 in dem Boden 47 des Widerlagers 46 aufgenommen. Somit sind die Kopplungshülsen 24 mit den Mitnehmern 30 arretiert, da eine Bewegung der Mitnehmer 30 entlang der Verbindungslinie zwischen den zweiten Löchern 57, die in Längsrichtung des Kopplungsstückes 8 verläuft, nicht erfolgen kann, wodurch eine Bewegung der Kopplungshülsen 24 unter Verringerung ihres axialen Abstandes voneinander verhindert wird. Da das Säulenstück 22 die Lenksäulenteile 34 drehfest miteinander verbindet, ferner das Kopplungsstück 8 mit dem Säulenstück 22 der Aussparung 10 in dem , Lenkkopfrohr 26 nicht entnehmbar ist, solange die Kopplungshülsen 24 in den jeweils benachbarten Abschnitt des Lenkkopfrohres 26 eingedreht sind, und schließlich die Kopplungshülsen 24 wegen der Abstandsarretierung nicht in das Schutzrohr 28 eingedreht bzw. aus den benachbarten Abschnitten des Lenkkopfrohres 26 herausgedreht werden können, ist das Kopplungsstück 8 in dem ersten Zustand, der Entsicherungsstellung, arretiert.

Ein Übergang aus der Entsicherungsstellung in die Sicherungsstellung- funktioniert wie folgt: Zum Aufheben der Arretierung betätigt der Benutzer die Drucktaste 44, wodurch die bezüglich des Gehäuses 42 ortsfest gelagerte Gelenkschere 48 geschlossen wird. Die Gelenkschere 48 zieht die Drucktaste 44 und das Widerlager 46 gegen die Vorspannung der Federn zu- bzw. ineinander. Dabei wird der Lagerboden 47 von dem Gehäuseboden 43 abgehoben. Die Mitnehmer 30 werden aus den peripheren Arretierungslöchern 57 im Boden 47 des Widerlagers 46 freigegeben. Wenn in diesem Zustand der Benutzer das Schutzrohr 28 verdreht, werden die Mitnehmer 30 im Langloch 32 in der Wand des Schutzrohres 28 mitgeführt und nehmen ihrerseits die Kopplungshülsen 24 mit. Dabei werden die Kopplungshülsen 24 je nach Drehrichtung aus dem benachbarten Abschnitt des Lenkkopfrohres 26 heraus- oder in diesen derart hineingedreht, daß die Kopplungshülsen 24 im Laufe der Drehung aufgrund der zueinander gegenläufigen Gewinde ihren axialen Abstand voneinander verändern. Entsprechend verändert sich auch der Abstand der Mitnehmer 30 voneinander. Die Mitnehmer 30 laufen während der Drehung des Schutzrohres 28 zwischen der ersten und der zweiten Arretierungsstellung an der Unter- bzw. Außenseite des Bodens 47 des Widerlagers 46 entlang und verhindern so gegen die von den Federn ausgeübte Vorspannung ein Absenken des Widerlagers 46 auf den Boden 43 des Gehäuses 42.

Wenn die Kopplungshülsen 24 aus dem jeweils benachbarten Abschnitt des Lenkkopfrohres 2 herausgedreht sind, befinden sich die Mitnehmer 30 in der zweiten Arretierungsstellung. Wenn die Drucktaste 44 nun freigegeben wird, werden die Drucktaste 44 und das Widerlager 46 aufgrund der von den Federn ausgeübten Vorspannung auseinandergeschoben. Dabei werden die beiden Mitnehmer 30 gemeinsam mit dem zentralen Arretierungsloch 56 im Boden 47 des Widerlagers 46 in Eingriff gebracht. Somit sind die Mitnehmer 30 mit den Kopplungshülsen 24 in der Sicherungsstellung arretiert. Da die Kopplungshülsen 24 aus den benachbarten Abschnitten des Lenkkopfrohrs 26 herausgedreht sind, ist das Kopplungsstück 8 nun aus der Aussparung 10 entnehmbar und in eine Sicherungsstellung bringbar.

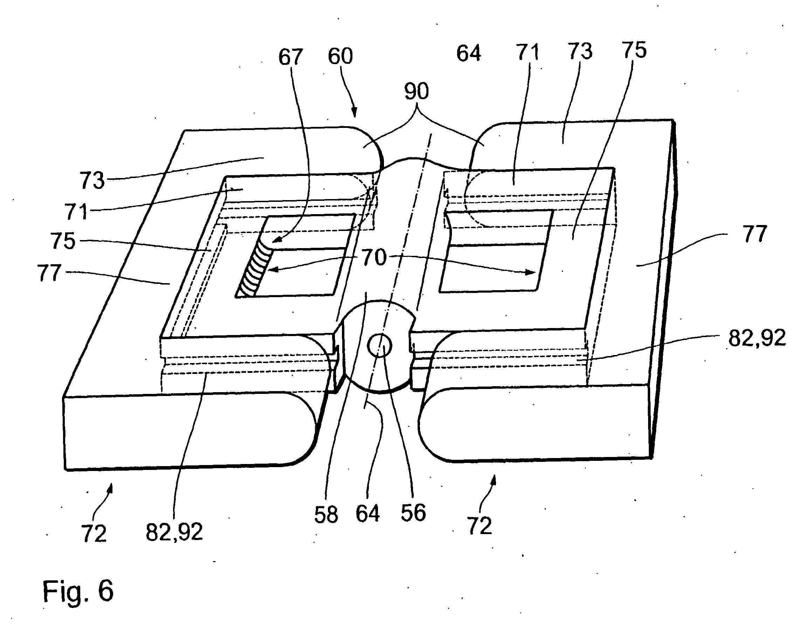

In den Fig. 6 bis 12 ist eine zweite Ausführungsform der erfindungsgemäßen Diebstahlsicherungsvorrichtung dargestellt. Bei der zweiten Ausführungsform der Erfindung ist das Trennmittel als ein Verbindungselement 60 ausgebildet. Das in Fig. 6 im einzelnen (jedoch ohne Spreizelemente) dargestellte Verbindungselement 60 weist einen im wesentlichen zylindrischen Kern 58, der mit einer axialen Bohrung 56 versehen ist, sowie ferner zwei Eingriffbügel 70 auf. Jeder Eingriffbügel 70 ist etwa U-förmig mit zwei Schenkeln 71 ausgebildet, die durch einen Querbalken 75 voneinander beabstandet sind. Die freien Enden des Eingriffbügels 70 sind an den Kern 58 derart angeformt, daß die Eingriffbügel 70 in einer Ebene einander gegenüberliegen und ein Rechteck bilden, dessen Seitenhalbierende mit der Längsachse des Kerns 58 zusammenfällt und die Mittelachse 64 des Verbindungselments 60 bildet.

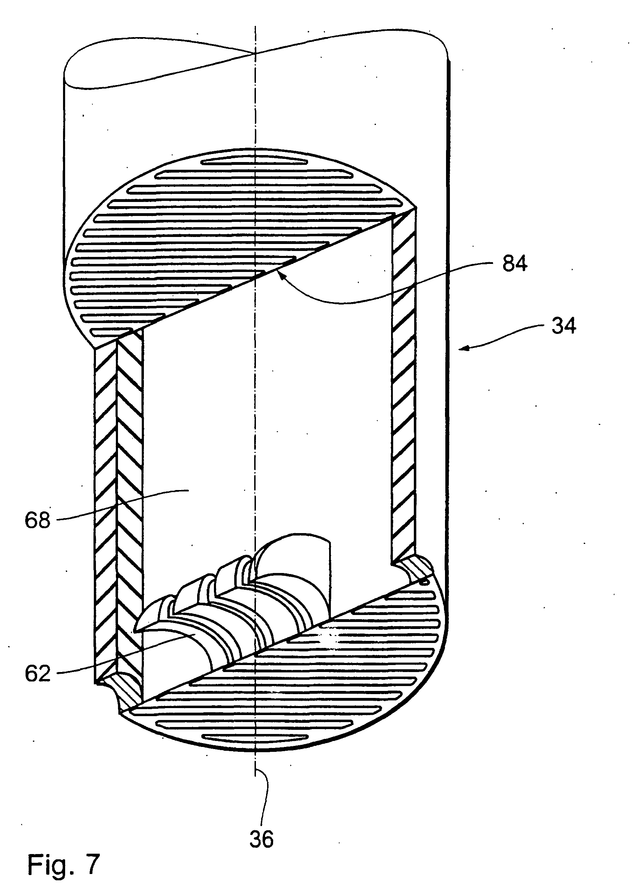

Auf der dem Kern 58 zugewandten Innenfläche des Querbalkens 75 des Eingriffbügels 70 ist ein individuelles Profil 67 ausgebildet. Der Eingriffbügel 70 ist für die Aufnahme einer Kralle 62 vorgesehen, die - wie in Fig. 7 dargestellt -an dem freien Ende eines Lenksäulenteils 34 ausgebildet ist. Die Kralle 62 weist ihrerseits ein Profil auf, das zu dem Profil 67 des zugeordneten Querbalkens 75 komplementär ist.

Das Verbindungselement 60 weist ferner zwei Arretierungsbügel 72 auf. Die Arretierungsbügel 72 sind - wie die Eingriffbügel 70 - etwa U-förmig jeweils mit zwei Schenkeln 73 ausgebildet, die durch einen Querbalken 77 voneinander beabstandet sind. Die Arretierungsbügel 72 liegen in der Ebene der Eingriffbügel 70 einander gegenüber, sind entlang der Mittelachse 64 voneinander getrennt und gegeneinander vorgespannt. Die einander gegenüberliegenden Stirnflächen 90 an den freien Enden der Arretierungsbügel 72 sind konvex ausgebildet.

Die dem Schenkel 73 der Arretierungsbügel 72 zugewandte Oberfläche der Eingriffbügels 70 ist mit einer radial verlaufenden Führungsnut 92 versehen. An die den Schenkeln 71 der Eingriffbügel 70 zugewandte Oberfläche der Arretierungsbügel 72 ist eine radial verlaufende Schiene 82 angeformt, die mit der zugeordneten Führungsnut 92 des Eingriffbügels 70 im Eingriff steht. Dadurch sind die Arretierungsbügel 72 an den Eingriffbügeln 70 radial zur Mittelachse 64 verschiebbar gelagert.

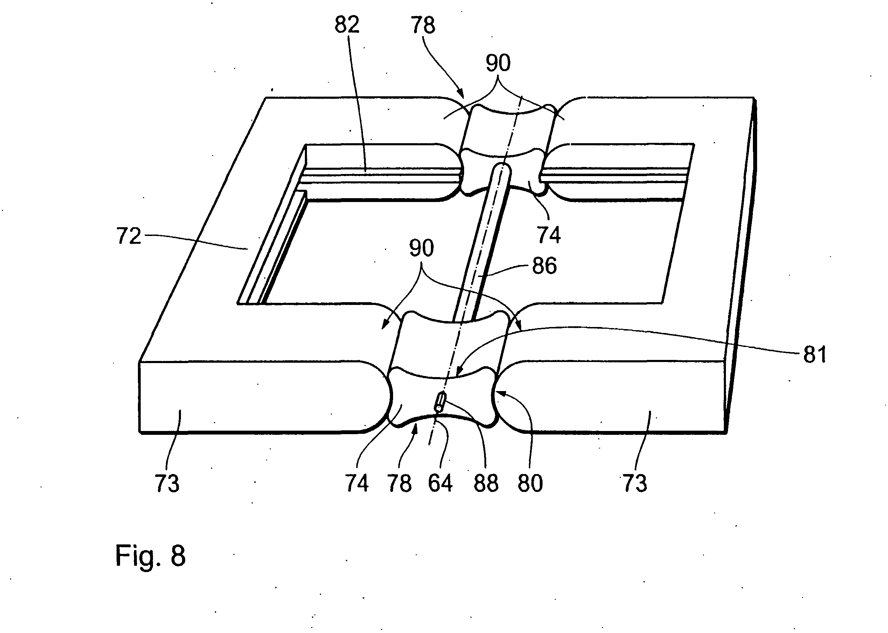

Die einander gegenüberliegenden Arretierungsbügel 72 sind zum besseren Verständnis in Fig. 8 ohne Kern 58 und Eingriffbügel 70 dargestellt. Zwischen den einander gegenüberliegenden und gegeneinander vorgespannten Arretierungsbügeln 72 sind zwei etwa quaderförmige Spreizelemente 78 geklemmt. Die Spreizelemente 78 sind an den freien Enden einer Stange 86 jeweils derart befestigt, daß die Stangenachse die Stirnflächen 74 der Spreizelemente 78 rechtwinklig durchsetzt. Die Stange 86 ist in der axialen Bohrung 56 des Kerns 58 drehbar derart gelagert, daß die Stangenachse mit der Mittelachse 64 des Verbindungselments zusammenfällt.

Das Spreizelement 78 weist ein im wesentlichen rechteckiges Querschnittsprofil mit zwei einander gegenüberliegenden Breitseiten 81 und zwei zu den Breitseiten 81 rechtwinklig angeordneten Schmalseiten 80 auf. Die Ecken des Querschnittprofils sind gerundet und seine Seiten sind jeweils konkav ausgebildet.

Da die Spreizelemente 78 jeweils zwischen den gegeneinander vorgespannten Arretierungsbügeln 72 eingeklemmt sind, liegt eine kraftschlüssige Verbindung zwischen jedem Spreizelement 78 und den gegen dieses Spreizelement 78 andrückenden Schenkeln 73 der Arretierungsbügel 72 vor. Die kraftschlüssige Verbindung wird durch eine formschlüssige Verbindung ergänzt, da sich jeweils die konvexen Stirnflächen 90 der Arretierungsbügel 72 an die zugeordneten konkaven Seitenflächen des Spreizelements 78 anschmiegen.

Wenn die quaderförmigen Spreizelemente 78 mit der Fläche der Breitseite 81 an den Stirnflächen 90 anliegen, sind die Arretierungsbügel 72 etwa um die Länge der Schmalseite 80 der Spreizelemente 78 voneinander beabstandet. Wenn dagegen die Spreizelemente 78 mit der Fläche der Schmalseite 80 an den Stirnflächen 90 anliegen (vgl. Fig. 8), sind die Arretierungsbügel 72 etwa um die Länge der Breitseite 81 voneinander beabstandet. Somit bestimmt die Drehstellung der Spreizelemente 78 zwischen den Arretierungsbügeln 72 den Abstand der Arretierungsbügel 72 voneinander.

Bei der vorliegend beschriebenen Ausführungsform der Erfindung befindet sich in dem Spreizelement 78 zur zusätzlichen Sicherung ein Schloß (nicht dargestellt). Das Schloß ist mittels eines Schlüssels betätigbar, der durch eine Öffnung 88 in das Spreizelement 78 einsteckbar ist. Wenn der Schlüssel in das Schloß gesteckt ist und paßt, kann der Benutzer mittels des Schlüssels die miteinander durch die Stange 86 verbundenen Spreizelemente 78 um die Mittelachse 64 drehen. Aufgrund der kraft- und formschlüssigen Verbindung der Spreizelemente 78 mit den Arretierungsbügeln 72 folgen letztere der Drehbewegung der Spreizelemente 78. Die Arretierungsbügel 72 nehmen bei dieser Drehbewegung die Eingriffbügel 70 mit dem Kern 58 mit, da die Schienen 82 jedes Arretierungsbügels 72 in die jeweils zugeordneten Führungsnuten 92 der Eingriffbügel 70 eingreifen.

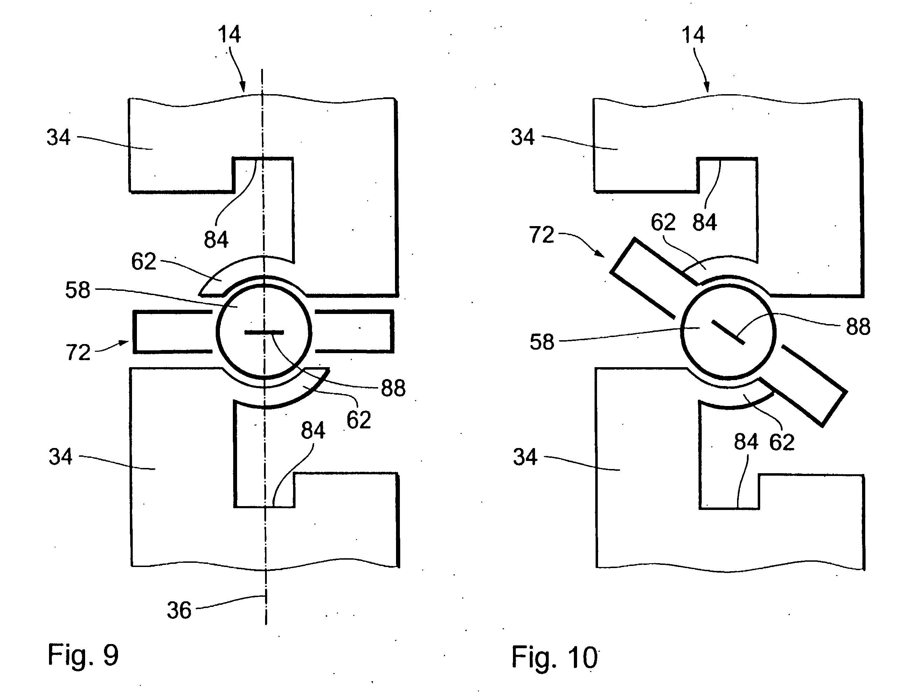

Nachfolgend wird die Verwendung des Verbindungselements 60 beschrieben. Fig. 9 - 12 zeigen schematisch einzelne Schritte des Übergangs von der Sicherungsstellung, in der die drehfeste Kopplung der Lenksäulenteile 34 aufgehoben ist, in die Entsicherungsstellung, in der die drehfeste Kopplung der Lenksäulenteile 34 hergestellt ist. Durch eine Öffnung in der Wand des Lenkkopfrohres 26 im zur Aufnahme des Verbindungselements 60 vorgesehenen Abschnitt (in Fig. 9 - 1 2 nicht dargestellt) wird das Verbindungselement 60 in das Innere des Lenkkopfrohres 26 zwischen die Lenksäulenteile 34 eingeführt. Wie in Fig. 9 dargestellt, liegt das zwischen die Lenksäulenteile 34 eingeschobene Verbindungselement 60 in einer Ebene, die von der Lenksäulenachse 36 senkrecht durchsetzt wird. Die Arretierungsbügel 72 klemmen die Spreizelemente 78 (in Fig. 9 - 12 nicht dargestellt) zwischen den Stirnflächen 90 der freien Enden ihrer Schenkel 73 ein. Dabei liegen die Spreizelemente 78 mit den Flächen der Breitseiten 81 an den Stirnflächen 90 an. Der Abstand zwischen den freien Enden der einander gegenüberliegenden Arretierungsbügel 72 wird somit durch die Länge der Schmalseite 80 der Spreizelemente 78 bestimmt.

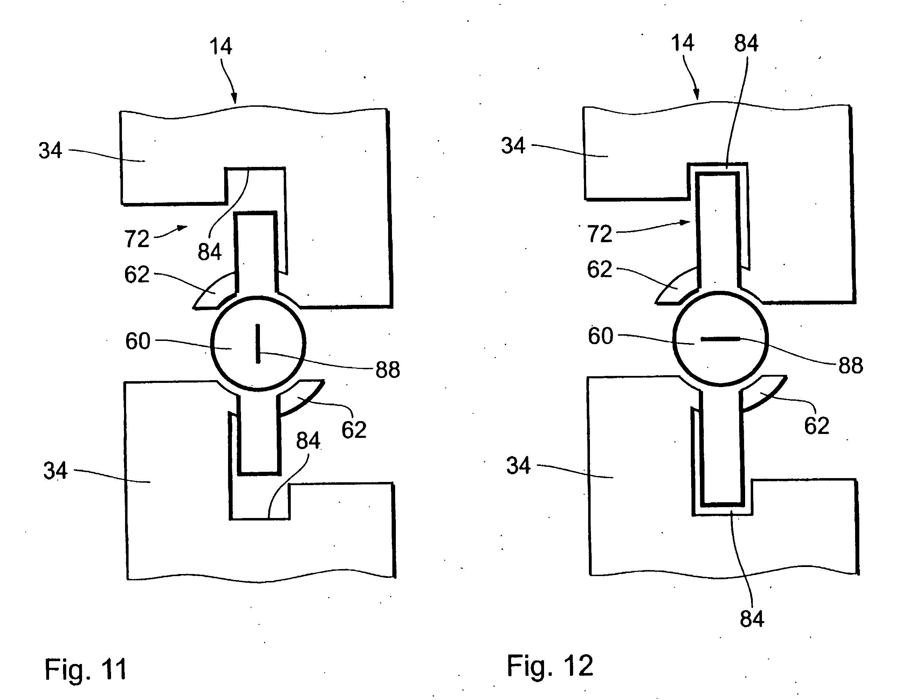

Der Benutzer steckt den Schlüssel (nicht dargestellt) durch die Öffnung 88 in das Schloß und dreht diesen - gemäß der Darstellung im Uhrzeigersinn. Bei der Drehung des Schlüssels - in Fig. 10 um 45° und in Fig. 11 um 90° - wird in der oben beschriebenen Weise das Verbindungselement 60 mitgenommen. Die Eingriffbügel 70 schieben sich über die Krallen 62, die an den Lenksäulenteilen 34 ausgebildet sind. Das auf den Krallen 62 ausgebildete Profil 68 gelangt dabei in Eingriff mit dem Profil 67 an der Innenseite des Eingriffbügels 70. Die Drehbewegung kann nur vollzogen werden, wenn die Profile 67 und 68 komplementär sind, so daß der Eingriff der Profile 67 und 68 ineinander gelingt. Wenn das Verbindungselement 60 - wie in Fig. 11 dargestellt - um 90° gedreht ist, halten die Krallen 62 die Eingriffbügel 70. Die Lenksäulenteile 34 sind miteinander drehfest verbunden und das Fahrrad ist entsichert.

Zur besonders zuverlässigen Entsicherung des Fahrrades dreht der Benutzer den Schlüssel um weitere 90° (vgl. Fig. 12). Das Verbindungselement 60 vermag dieser weiteren Viertelkreisdrehung nicht zu folgen, weil die Krallen 62 die Eingriffbügel 70 halten. Wenn jedoch das vom Benutzer aufgebrachte Drehmoment ausreicht, um die kraft- und formschlüssige Verbindung der Spreizelemente 78 mit den Arretierungsbügeln 72 aufzuheben, folgen allein die Spreizelemente 78 dieser weiteren Drehung des Schlüssels. Die Arretierungsbügel 72 sind infolge dieser weiteren Drehung ein Stück weiter auseinandergeschoben als zuvor, denn die Spreizelemente 78 werden zwischen den Arretierungsbügeln 72 derart gedreht, daß der Abstand der Arretierungsbügel 72 voneinander nunmehr durch die Länge der Breitseite 81 anstelle der Schmalseite 80 des Spreizelements 78 bestimmt ist (vgl. auch Fig. 8). Die Arretierungsbügel 72 werden von in den Lenksäulenteilen 34 ausgebildeten Arretierungsausnehmungen 84 aufgenommen (vgl. Fig. 7), so daß ein unkontrolliertes Rückdrehen des Verbindungselements 60 in die Sicherungsstellung nicht möglich ist. Das Verbindungselement 60 ist somit zuverlässig in der Entsicherungsstellung arretiert.

Für einen Übergang des Verbindungselements 60 in die Sicherungsstellung muß der Benutzer zunächst die Spreizelemente 78 - gemäß der Darstellung der Fig. 9 - 12 gegen den Uhrzeigersinn - zurückdrehen, bevor er dann das Verbindungselement 60 in die Sicherungsstellung dreht und dem Lenkkopfrohr entnimmt, wodurch die drehfeste Kopplung des Fahrradlenkers 6 mit der Gabel 5 vollständig aufgehoben wird.

## Patentansprüche

1. Diebstahlsicherungsvorrichtung für Fahrräder, die einen Fahrradrahmen (2) und eine am Fahrradrahmen (2) gelagerte Lenksäule (14) zum Lenken des Fahrrades aufweisen, welche für eine drehfeste Kopplung eines Fahrradlenkers (6) mit einer Gabel (5) für ein Vorderrad (4) vorgesehen ist, mit einem Trennmittel zum Aufheben der drehfesten Kopplung,
**dadurch gekennzeichnet, daß** als Trennmittel ein Kopplungsstück (8) bzw. ein Verbindungselement (60) vorgesehen ist, das die Lenksäule (14) in zwei Teile (34) unterbricht und die drehfeste Kopplung dieser Lenksäulenteile (34) in einem ersten Zustand herstellt und in einem zweiten Zustand aufhebt.

2. Diebstahlsicherungsvorrichtung nach Anspruch 1,
**dadurch gekennzeichnet, daß** das Kopplungsstück (8) bzw. das Verbindungselement (60) im wesentlichen spiegel- oder punktsymmetrisch ausgebildet ist und beidseitig der Symmetrieebene Ausnehmungen und/oder Ansätze aufweist, die in einem ersten Zustand mit an den Lenksäulenteilen (34) ausgebildeten Komplementärmitteln im Eingriff stehen und dabei eine form- und/oder kraftschlüssige Verbindung eingehen und in einem zweiten Zustand von den Komplementärmitteln gelöst sind.

3. Diebstahlsicherungsvorrichtung nach Anspruch 2,
**dadurch gekennzeichnet, daß** das Kopplungsstück (8) ein Säulenstück (22) aufweist, das im ersten Zustand zwischen den Teilen (34) der Lenksäule (14) eingeschoben ist und mit diesen fluchtet und das im zweiten Zustand von den Teilen (34) der Lenksäule (14) vollständig entfernt ist.

4. Diebstahlsicherungsvorrichtung nach Anspruch 3,
**dadurch gekennzeichnet, daß** das Säulenstück (22) in zwei axial nebeneinander angeordneten Kopplungshülsen (24) aufgenommen ist, die Außengewinde (25) aufweisen, die jeweils für einen Eingriff mit einem entsprechenden Innengewinde (27) in dem jeweils benachbarten Abschnitt des Fahrradrahmens (2) vorgesehen sind.

5. Diebstahlsicherungsvorrichtung nach Anspruch 4,
**dadurch gekennzeichnet, daß** die Gewinde (25, 27) mehrgängig sind.

6. Diebstahlsicherungsvorrichtung nach Anspruch 4 oder 5,
**dadurch gekennzeichnet**, daßdie Gewindesteigung ausreicht, um mit maximal einer Umdrehung jeder Kopplungshülse (24) um das Säulenstück (22) eine axiale Verschiebung um eine vorgegebene Einschublänge der jeweiligen Kopplungshülse (24) zu erreichen.

7. Diebstahlsicherungsvorrichtung nach Anspruch 6,
**gekennzeichnet durch** ein Schutzrohr (28) zur Aufnahme des Säulenstücks (22) und der Kopplungshülsen (24), das von dem Fahrradrahmen (2) lösbar ist und das axial verschiebbare Mitnehmer (30) aufweist, die bei einer Drehung des Schutzrohres (28) die Kopplungshülsen (24) mitnehmen.

8. Diebstahlsicherungsvorrichtung nach Anspruch 7,
**dadurch gekennzeichnet, daß** die Mitnehmer (30) als radiale Stifte ausgebildet sind, die durch mindestens ein axiales Langloch (32) in dem Schutzrohr (28) nach außen ragen und die jeweils mit einer der Kopplungshülsen (24) im Eingriff stehen.

9. Diebstahlsicherungsvorrichtung nach Anspruch 2,
**dadurch gekennzeichnet, daß** das Verbindungselement (60) ring- bzw. rahmenförmig mit Eingriffbügeln (70) ausgebildet ist, die für den Eingriff mit Krallen (62) der Lenksäulenteile (34) in dem ersten Zustand vorgesehen sind und die aus dem ersten Zustand in den zweiten Zustand durch eine Drehbewegung des Verbindungselements (60) um seine Mittelachse (64) in einen vorzugsweise rechten Winkel zur Achse (36) der Lenksäule (14) gelangen.

10. Diebstahlsicherungsvorrichtung nach Anspruch 9,
**dadurch gekennzeichnet, daß** das Verbindungselement (60) in dem zweiten Zustand durch eine Öffnung in der Wand des Fahrradrahmenabschnitts mit der Lenksäule (14) aus dieser entnehmbar bzw. in diese einsetzbar ist.

11. Diebstahlsicherungsvorrichtung nach Anspruch 10,
**dadurch gekennzeichnet, daß** das Verbindungselement (60) auf einem der Mittelachse (64) zugewandten Abschnitt der Eingriffbügel (70) ein individuelles Profil (67) aufweist, das mit einem komplementären Profil (68) auf den Krallen (62) in Eingriff bringbar ist.

12. Diebstahlsicherungsvorrichtung nach Anspruch 11,
**dadurch gekennzeichnet, daß** die Eingriffbügel (70) voneinander getrennt, bezüglich der Mittelachse (64) radial verschiebbar und mit Arretierungsausnehmungen (84) in den Lenksäulenteilen (34) in Eingriff bringbar sind.

13. Diebstahfsicherungsvorrichtung nach Anspruch 11,
**dadurch gekennzeichnet, daß** die Eingriffbügel (70) einen Innenring bilden, der von einem Außenring umgeben wird, der Arretierungsbügel aufweist, die voneinander unter Bildung von Stirnflächen (90) getrennt und jeweils auf dem zugeordneten Eingriffbügel (70) des Innenrings verschiebbar gelagert sind, und der ferner zwischen den Stirnflächen (90) der Arretierungsbügel (72) um die Mittelachse (64) drehbar gelagerte Spreizelementen (78) zum Auseinanderschieben der Arretierungsbügel (72) gegen eine Vorspannung aufweist.

14. Diebstahlsicherungsvorrichtung nach Anspruch 13,
**dadurch gekennzeichnet, daß** das Querschnittsprofil der Spreizelemente (78) in einer von der Mittelachse (64) rechtwinklig durchsetzten Ebene im wesentlichen rechteckig, vorzugsweise mit abgerundeten Ecken, ausgebildet ist.

15. Diebstahlsicherungsvorrichtung nach Anspruch 14,
**dadurch gekennzeichnet**, daßdie Seitendes Querschnittsprofils der Spreizelemente (78) konkav ausgebildet sind.

16. Fahrrad mit einem Fahrradrahmen (2) und einer am Fahrradrahmen (2) gelagerten Lenksäule (14) zum Lenken des Fahrrades, welche für eine drehfeste Kopplung eines Fahrradlenkers (6) mit einer Gabel (5) für ein Vorderrad vorgesehen ist,
**gekennzeichnet durch** eine Diebstahlsicherungsvorrichtung nach einem der vorstehenden Ansprüche.

17. Fahrzeug mit einer Lenksäule zum Lenken des Fahrzeugs, welche für eine drehfeste Kopplung einer Steuereinrichtung mit einer anzusteuernden Lenkeinrichtung vorgesehen ist,
**gekennzeichnet durch** eine Diebstahlsicherungsvorrichtung nach einem der Ansprüche 1 bis 15.

## Revendications

1. Dispositif d'antivol pour bicyclettes comprenant un cadre de bicyclette (2) et une colonne de direction (14) logée dans le cadre de bicyclette (2) pour guider la bicyclette qui est prévue pour. un accouplement solidaire en rotation d'un guidon de bicyclette (6) avec une fourche (5) pour une roue avant (4), avec un élément de séparation pour supprimer l'accouplement solidaire en rotation,
**caractérisé en ce que** comme élément de séparation est prévu un élément d'accouplement (8) ou un élément de liaison (60) qui sépare la colonne de direction (14) en deux parties (34) et qui réalise dans un premier temps l'accouplement solidaire en rotation de ces parties de colonne de direction (34) et l'interrompt dans un deuxième temps.

2. Dispositif d'antivol selon la revendication 1, **caractérisé en ce que** l'élément d'accouplement (8) ou l'élément de liaison (60) est configuré sensiblement en symétrie par réflexion ou en symétrie par points et comprend des deux côtés du plan de symétrie des évidements et/ou des saillies qui, dans un premier état, sont en prise avec des éléments complémentaires configurés sur les parties de colonne de direction (34) en réalisant ainsi la liaison en complémentarité de forme et/ou de force et qui, dans un deuxième état, sont dégagés des éléments complémentaires.

3. Dispositif d'antivol selon la revendication 2, **caractérisé en ce que** l'élément d'accouplement (8) comprend une partie de colonne (22) qui, dans le premier état, est enfilée entre les parties (34) de la colonne de direction (14) en étant en alignement avec celles-ci et qui, dans le deuxième état, est complètement éloignée des parties (34) de la colonne de direction (14).

4. Dispositif d'antivol selon la revendication 3, **caractérisé en ce que** la partie de colonne (22) est logée dans deux douilles d'accouplement (24) disposées côte à côte dans le sens axial et comprenant des filetages extérieurs (25) qui sont respectivement prévus pour être en prise avec un filetage intérieur correspondant (27) pratiqué dans la section respectivement voisine du cadre de bicyclette (2).

5. Dispositif d'antivol selon la revendication 4, **caractérisé en ce que** les filetages (26, 27) sont à pas multiples.

6. Dispositif d'antivol selon la revendication 4 ou 5, **caractérisé en ce que** le pas des filetages est suffisant pour obtenir avec au maximum un tour de rotation de chaque douille d'accouplement (24) autour de la partie de colonne (22) un déplacement axial d'une longueur d'introduction prédéterminée de la douille d'accouplement (24) respective.

7. Dispositif d'antivol selon la revendication 6, **caractérisé par** un tube de protection (28) pour le logement de la partie de colonne (22) et des douilles d'accouplement (24), qui peut être désolidarisé du cadre de bicyclette (2) et qui comprend des ergots d'entraînement (30) pouvant être déplacés dans le sens axial et qui entraînent les douilles d'accouplement (24) lors d'une rotation du tube de protection (28).

8. Dispositif d'antivol selon la revendication 7, **caractérisé en ce que** les ergots d'entraînement (30) sont configurés comme tiges radiales qui s'étendant vers l'extérieur à travers au moins un trou oblong axial (32) pratiqué dans le tube de protection (28) et qui sont respectivement en prise avec une des douilles d'accouplement (24).

9. Dispositif d'antivol selon la revendication 2, **caractérisé en ce que** l'élément de liaison (60) est configuré en forme d'anneau ou en forme de cadre avec des étriers d'engrènement (70) qui, dans le premier état, sont prévus pour l'engrènement avec des griffes (62) des parties de colonne de direction (34) et qui, lors du passage du premier état dans le deuxième état par un mouvement de rotation de l'élément de liaison (60) autour de son axe médian (64), se positionnent selon un angle de préférence droit par rapport à l'axe (36) de la colonne de direction (14).

10. Dispositif d'antivol selon la revendication 9, **caractérisé en ce que**, dans le deuxième état, l'élément de liaison (60) peut, à travers une ouverture dans la paroi de la section de cadre de bicyclette avec la colonne de direction (14), être extrait de celle-ci ou être placé dans celle-ci.

11. Dispositif d'antivol selon la revendication 10, **caractérisé en ce que**, dans une section des étriers d'engrènement (70) dirigée vers l'axe médian (64), l'élément de liaison (60) a un profil individuel (67) qui peut être mis en prise avec un profil complémentaire (68) se trouvant sur les griffes (62).

12. Dispositif d'antivol selon la revendication 11, **caractérisé en ce que** les étriers d'engrènement (70) peuvent être déplacés séparément les uns des autres dans le sens radial par rapport à l'axe médian (64) et peuvent être mis en prise avec des évidements de blocage (84) se trouvant dans les parties de colonne de direction (34).

13. Dispositif d'antivol selon la revendication 11, **caractérisé en ce que** les étriers d'engrènement (70) forment une bague intérieure qui est entourée par une bague extérieure comprenant des étriers de blocage séparés entre eux en formant des surfaces frontales (90) et logés de manière coulissante respectivement sur l'étrier d'engrènement correspondant (70) de la bague intérieure et qui comprend par ailleurs des éléments d'écartement (78) logés de manière tournante autour de l'axe médian (64) entre les surfaces frontales (90) des étriers de blocage (72) pour écarter les étriers de blocage (72) contre une force de précontrainte.

14. Dispositif d'antivol selon la revendication 13, **caractérisé en ce que**, dans un plan traversé à angle droit par l'axe médian (64), le profil de section des éléments d'écartement (78) est configuré sensiblement en forme de rectangle avec de préférence des angles arrondis.

15. Dispositif d'antivol selon la revendication 14, **caractérisé en ce que** les côtés du profil de section des éléments d'écartement (78) sont configurés de manière concave.

16. Bicyclette comprenant un cadre de bicyclette (2) et une colonne de direction (14) logée dans le cadre de bicyclette (2) pour guider la bicyclette qui est prévue pour un accouplement solidaire en rotation d'un guidon de bicyclette (6) avec une fourche (5) pour une roue avant, **caractérisée par** un dispositif d'antivol selon l'une quelconque des revendications précédentes.

17. Véhicule avec une colonne de direction pour le guidage du véhicule qui est prévue pour un accouplement solidaire en rotation d'un dispositif de commande avec un dispositif de direction à commander, **caractérisé par** un dispositif d'antivol selon l'une quelconque des revendications 1 à 15.

## Claims

1. Theftproofing arrangement for bicycles which have a bicycle frame (2) and a steering column (14), for steering the bicycle, mounted on the bicycle frame (2), this steering column being provided for coupling a bicycle handlebar (6) in a rotationally fixed manner to a fork (5) for a front wheel (4), having a separating means for eliminating the rotationally fixed coupling, **characterized in that** the separating means provided is a coupling component (8) or a connecting element (60) which divides the steering column (14) up into two parts (34) and produces the rotationally fixed coupling of these steering-column parts (34) in a first state and eliminates the same in a second state.

2. Theftproofing arrangement according to Claim 1, **characterized in that** the coupling component (8) or the connecting element (60) is of essentially mirror-symmetrical or point-symmetrical design and, on both sides of the symmetry plane, has recesses and/or extensions which, in a first state, engage with complementary means formed on the steering-column parts (34), and undergo a form-fitting and/or force-fitting connection in the process, and, in a second state, are released from the complementary means.

3. Theftproofing arrangement according to Claim 2, **characterized in that** the coupling component (8) has a column component (22) which, in the first state, is pushed in between the parts (34) of the steering column (14), and is aligned with these parts, and which, in the second state, is completely removed from the parts (34) of the steering column (14).

4. Theftproofing arrangement according to Claim 3, **characterized in that** the column component (22) is accommodated in two coupling sleeves (24) which are arranged axially one beside the other and have external threads (25) which are each provided for engagement with a corresponding internal thread (27) in the respectively adjacent section of the bicycle frame (2).

5. Theftproofing arrangement according to Claim 4, **characterized in that** the threads (25, 27) are multi-start threads.

6. Theftproofing arrangement according to Claim 4 or 5, **characterized in that** the thread pitch is sufficient to achieve, with a maximum of one revolution of each coupling sleeve (24) around the column component (22), an axial displacement by a predetermined pushing-in length of the respective coupling sleeve (24).

7. Theftproofing arrangement according to Claim 6, **characterized by** a protective tube (28) for accommodating the column component (22) and the coupling sleeves (24), the protective tube being releasable from the bicycle frame (2) and having axially displaceable carry-along elements (30) which carry along the coupling sleeves (24) when the protective tube (28) is rotated.

8. Theftproofing arrangement according to Claim 7, **characterized in that** the carry-along elements (30) are designed as radial pins which project outwards through at least one axial slot (32) in the protective tube (28) and each engage with one of the coupling sleeves (24).

9. Theftproofing arrangement according to Claim 2, **characterized in that** the connecting element (60) is designed in the form of a ring or frame with engagement brackets (70) which are provided for engaging with the claws (62) of the steering-column parts (34) in the first state and which pass out of the first state into the second state by a rotary movement of the connecting element (60) about its central axis (64), preferably at right angles to the axis (36) of the steering column (14).

10. Theftproofing arrangement according to Claim 9, **characterized in that** the connecting element (60), in the second state, can be removed from the steering column (14) and/or inserted into the same through an opening in the wall of the bicycle-frame section with the steering column.

11. Theftproofing arrangement according to Claim 10, **characterized in that**, on a section of the engagement brackets (70) which is directed towards the central axis (64), the connecting element (60) has an individual profile (67) which can be brought into engagement with a complementary profile (68) on the claws (62).

12. Theftproofing arrangement according to Claim 11, **characterized in that** the engagement brackets (70) are separate from one another, can be displaced radially in relation to the central axis (64) and can be brought into engagement with arresting recesses (84) in the steering-column parts (34).

13. Theftproofing arrangement according to Claim 11, **characterized in that** the engagement brackets (70) form an inner ring which is enclosed by an outer ring which has arresting brackets, these being separated from one another to form end surfaces (90) and each being mounted in a displaceable manner on the associated engagement bracket (70) of the inner ring, and which, furthermore, between the end surfaces (90) of the arresting brackets (72), has spreading elements (78) which are mounted in a rotatable manner about the central axis (64) and are intended for pushing apart the arresting brackets (72) counter to prestressing.

14. Theftproofing arrangement according to Claim 13, **characterized in that** the cross-sectional profile of the spreading elements (78) in a plane through which the central axis (64) passes at right angles is of essentially rectangular design, preferably with rounded corners.

15. Theftproofing arrangement according to Claim 14, **characterized in that** the sides of the cross-sectional profile of the spreading elements (78) are of concave design.

16. Bicycle with a bicycle frame (2) and a steering column (14), for steering the bicycle, mounted on the bicycle frame (2), this steering column being provided for coupling a bicycle handlebar (6) in a rotationally fixed manner to a fork (5) for a front wheel, **characterized by** a theftproofing arrangement according to one of the preceding claims.

17. Vehicle with a steering column for steering the vehicle, this steering column being provided for coupling a control device in a rotationally fixed manner to a steering device which is to be activated, **characterized by** a theftproofing arrangement according to one of Claims 1 to 15.
